# EUROPEAN PATENT APPLICATION

(11) **EP 1 764 730 A1**
(43) Date of publication of application: **21.03.2007**
(21) Application number: 05743641.2
(22) Date of filing: 18.05.2005
(51) Int. Cl.: G06Q 10/00, G06F 12/14

(54) **INTELLECTUAL PROPERTY CREATION SUPPORT METHOD BY LINKED TYPE INTELLECTUAL MANAGEMENT SYSTEM, INFORMATION PROVIDING SYSTEM HAVING SUBLICENSE MANAGEMENT FUNCTION, AND COMPUTER PROGRAM**

(30) Priority: 20.05.2004 JP 2004150692
(71) Applicant: Greennet Co., Ltd., Tokyo 1050001 (JP); The University of Tokushima, Tokushima-shi, Tokushima 7708501 (JP)
(72) Inventor: KINJOU, Isao, Saitama 3510012 (JP); NISHIYAMA, Yuugorou;, , Tokyo 1250041; (JP); BEI, Ki Moon, Yokohama-shi, Kanagawa 2240003 (JP); NAKASUJI, Katsuyoshi;, ma 7700855; (JP); FUJII, Akio;, 791118; (JP); HAMADA, Yasunori;, 708031; (JP)
(74) Representative: Brown, Kenneth Richard
(86) International application number: PCT/JP2005/009488
(87) International publication number: WO 2005/114510

(57) **Abstract**

To provide an assisting method for creating an intellectual value together with information requesters. Second intellectual property management systems SLs1 to SLs3 provided in second-class licensees given sub-licenses for system use from a first-class licensee make requests for intellectual property information to a first intellectual property management system MLs provided in the first-class licensee in response to requests from user systems US1 to US3 having demands for creating intellectual properties. The first intellectual property management system MLs publishes a search result of intellectual property information, which is obtained in response to a request from a user system US4, on a browser screen customized for the first intellectual property management system MLs itself, and allows the user system US4 to browse the search result. Moreover, the first intellectual property management system MLs publishes search results of the intellectual property information requested of the second intellectual property management systems on browser screens customized for the second intellectual property management systems, and distributes the search results. The second intellectual property management systems SLs1 to SLs3 allow the user systems US1 to US4 to browse the browser screens.

## Description

### Technological Field

The present invention relates to an information providing system provided with a function to manage a license, a sub-license in particular, for software or a computer system (hereinafter, simply referred to as a "system", and use thereof is referred to as "system use") installing the software therein, and relates to an intellectual property creation assisting method by a cooperative intellectual property management system, the information providing system and the intellectual property creation assisting method using a network technology and a computer technology. Note that, in this specification, the term "intellectual property" is used as a term generically referring to intellectual property and intellectual property rights unless particularly distinguished.

### Background of the Invention

It has been common for a software developer to license a third party to use a system. In this case, a party who has develops software or provides a computer system installing the software therein is referred to as a "licenser" , a party who concludes a license agreement on the system use with the licenser is referred to as a "licensee". In usual, a license contract in the software industry includes, as a contract content, only an item that the licensee should use the system by him/herself, and giving a sub-license to the third party from the licensee is not performed. This is because the third party concerned just has to directly negotiate with the licenser in the case of desiring to use the system.

However, in the case where there is a specific candidate for the licensee, who has human, economic, regional and other connections with the licensee, and has a similar demand for a license to the licensee concerned, if the candidate for the licensee can allow the licensee concerned to intervene in the license negotiation with the licenser without directly making the license negotiation therewith, then, not only for the candidate for the licensee but also for the licenser, it is possible to avoid complexity of a procedure for the contract, and this is rational. Moreover, an expansion of the demand for the license is expected. Furthermore, plural licensees who use the same system may cooperate together, thus also making it possible to facilitate a large-scale information-related service which is difficult for only one licensee to manage.

In particular, in the case where the system is an intellectual property management system that performs processing regarding search/distribution of intellectual property information such as patent information including special terms, the plural licensees including licensees acquainted with search formulas cooperate together, thus making it possible to provide the intellectual property information appropriately and efficiently and give opportunities of utilization thereof to extremely many small- to medium-sized businesses which have not daily contacted with the intellectual property information, or do not know how to contact therewith, and have not been therefore able to acquire the useful intellectual property information.

Recently, intellectual property headquarters have been being founded also in local universities. Universities are organizations expected to exert high intellectual potentials, and also have large seeds of business and intellectual property creation. However, under the current circumstances, funds, materials and human resources are not equally ensured in the intellectual property headquarters of all the universities. Accordingly, these local universities individually become the licensees of the above-described intellectual property management system, cooperate together, and appropriately provide the intellectual property information to local small- to medium-sized businesses, and moreover, increase contacts of the respective universities with the small- to medium-sized businesses and the like. In such a way, needs and the seeds are fused together, and intellectual industries of the respective regions can be promoted.

Under the above circumstances, it is an object of the present invention to provide an intellectual property creation assisting method for creating a new intellectual value together with information requesters, in which, for example, plural intellectual property management systems are allowed to cooperate together under a sub-license contract.

It is another object of the present invention, in order to facilitate an implementation of the intellectual property creation assisting method, to provide an information providing system that is capable of managing contents of the sub-license contract regarding the use of the computer system including the intellectual property management system without troubling the licenser, and is easy to use for the licensee given the sub-licenses.

It is still another object of the present invention to provide a computer program for realizing the information providing system as described above in a general-purpose computer system.

### Disclosure of the Invention

An intellectual property creation assisting method to be provided by the present invention is a method executed by a cooperative intellectual property management system in which a first intellectual property management system and a second intellectual property management system cooperate each other through a computer network, said first intellectual property management system is provided in a first-class licensee, and said second intellectual property management system is provided in a second-class licensee to which a sub-license for system use is given from the first-class licensee, the method including the steps of: making a request, from the second intellectual property management system, for a search of intellectual property information regarding an intellectual property to be created to the first intellectual property management system in response to a request from a second demander having a demand for creating the intellectual property, said demand existing in a region to which the second-class licensee relates; performing, from the first intellectual property management system, a requested search of intellectual property information in response to a request from a first demander having a demand for creating intellectual property, the demand existing in a region to which the first-class licensee relates, making layout of a search result on a browser screen customized for the first intellectual property management system and displaying the browser screen on a display of a terminal operated by the first demander, and searching the intellectual property information requested from the second intellectual property management system, and making layout of a search result on a browser screen customized for the second intellectual property management system and distributing the search result to the second intellectual property management system; and displaying, by the second intellectual property management system, the browser screen on a display of a terminal operated by the second demander, whereby the first intellectual property management system and the second intellectual property management system provide the intellectual property information to the first demander and the second demander in cooperation with each other.

The "first-class licensee" is a party given the license for the system use from the licenser who has developed the system, for example, a company, a university and the like, and the "sub-license" means a license given by the licensee. The "intellectual property management system" is an information processing system added with a communication function, which performs information processing regarding the assistance to create the intellectual property. The "intellectual property information" is publications digitized and laid-open from domestic and foreign public institutions, digitized technical information, know-how and the like which are distributed on a network, regarding inventions, devices, designs and trademarks for example.

An information providing system of the present invention is an information providing system added with a sub-license management function, which can be allowed to function as, for example, the above-described first intellectual property management system, and includes constituent elements as below.
(1) a search engine for searching electronic information;
(2) a first-class licensee DB for recording first inherent information of a first-class licensee having an authority to give a sub-license for system use, and a first license condition for the system use permitted from a licenser;
(3) a second-class licensee DB for recording second inherent information of a second-class licensee having concluded an agreement on the sub-license with the first-class licensee, and a second license condition having inherited a part or all of the first license condition;
(4) browser screen preparation means for preparing a first browser screen of which layout is customized for the first-class licensee based on the first inherent information recorded in the first-class licensee DB, and a second browser screen of which layout is customized for the second-class licensee based on the second inherent information recorded in the second-class licensee DB; and
(5) control means for publishing, on the first browser screen, a search result searched by the search engine by means of an information search formula according to the first license condition recorded in the first-class licensee DB, and enabling display of the first browser screen on a display of an operation terminal operated by the first-class licensee, and meanwhile, publishing, on the second browser screen, a search result searched by the search engine by means of an information search formula according to the second license condition recorded in the second-class licensee DB, and enabling display of the second browser screen on a display of an operation terminal operated by the second-class licensee.

In the information providing system configured as described above, a relationship between the first-class licensee and the second-class licensee can be grasped at any time by means of the first-class licensee DB and the second-class licensee DB. Accordingly, even if the licenser who has given an authority for the system use to the first-class licensee does not get involved in the license contract, a similar effect to that in the case of indirectly concluding an agreement on the license contract with the second-class licensee can be obtained. Moreover, the search result based on the first license condition recorded in the first-class licensee DB is published on the first browser screen for the first-class licensee, and the search result based on the second license condition recorded in the second-class licensee DB is published on the second browser screen for the second-class licensee. Accordingly, an information providing system easy to use for the respective licensees can be realized. In particular, the second-class licensee can construct an environment as if constructing an information providing system that transmits information generated in the system itself even if a special computer system is not newly introduced.

A computer program of the present invention is a computer program for causing a computer to operate as an information providing system added with a sub-license management function, the program causing the computer to function as: a search engine for searching electronic information; a first-class licensee DB for recording first inherent information of a first-class licensee having an authority to give a sub-license for system use, and a first license condition for the system use permitted from a licenser; a second-class licensee DB for recording second inherent information of a second-class licensee having concluded an agreement on the sub-license with the first-class licensee, and a second license condition having inherited a part or all of the first license condition; browser screen preparation means for preparing a first browser screen of which layout is customized for the first-class licensee based on the first inherent information recorded in the first-class licensee DB, and a second browser screen of which layout is customized for the second-class licensee based on the second inherent information recorded in the second-class licensee DB; and control means for publishing, on the first browser screen, a search result searched by the search engine by means of an information search formula according to the first license condition recorded in the first-class licensee DB, and enabling display of the first browser screen on a display of an operation terminal operated by the first-class licensee, and meanwhile, publishing, on the second browser screen, a search result searched by the search engine by means of an information search formula according to the second license condition recorded in the second-class licensee DB, and enabling display of the second browser screen on a display of an operation terminal operated by the second-class licensee.

### Brief Description of the Drawings

FIG. 1 is a conceptual view of a cooperative intellectual property management system.
FIG. 2 is an entire configuration view of the cooperative intellectual property management system.
FIG. 3 is a view showing roles of a first intellectual property management system and second intellectual property management systems for information distribution to a user system.
FIG. 4 is a view showing a state of passing information between the first intellectual property management system and terminals of the respective laboratories in the inside of a university.
FIG. 5 is a view showing information inputted/outputted to/from the first intellectual property management system, and an outline of institutions connected thereto.
FIG. 6 is a view showing an entire configuration of the intellectual property management system, and a connection relationship with other terminals and the like.
FIG. 7 is a functional configuration diagram of a license management block.
FIG. 8 is an explanatory view showing content examples of a first-class licensee DB, second-class licensee DBs and an authorization ID DB.
FIG. 9 is an explanatory view showing relationships between "my page" for the first-class licensee and "my pages" for the second-class licensees.
FIG. 10 is a functional configuration diagram of an information search block.
FIG. 11 is a functional configuration diagram of a search condition block.
FIG. 12 is a functional configuration diagram of an information output block.
FIG. 13 is a functional configuration diagram of a communication block.
FIG. 14 is a flowchart of first-class licensee registration processing.
FIG. 15 is a flowchart of second-class licensee registration processing.
FIG. 16 is a flowchart of search formula preparation processing.
FIG. 17 is a flowchart of search and periodical distribution processing.
FIG. 18 is a flowchart of search and non-periodical distribution processing.
FIG. 19 is a view showing an example of "my page" for each of laboratories, which is distributed in the inside of a university A as the first-class licensee.
FIG. 20 is a view showing an example of "my page" for each of laboratories, which is distributed in the inside of a university B as the second-class licensee.
FIG. 21 is a view showing an example of "my page" distributed by the university A to the outside thereof.
FIG. 22 is a view showing an example of "my page" distributed by the university B to the outside thereof.
FIG. 23 is a view showing a selection screen for search menus.
FIG. 24 is a view showing a screen example when a dialogue search is performed.

### Best Mode for Carrying Out the Invention

An exemplary embodiment of a cooperative intellectual property management system to which the present invention is applied is described below.

### [Concept of cooperative intellectual property management system]

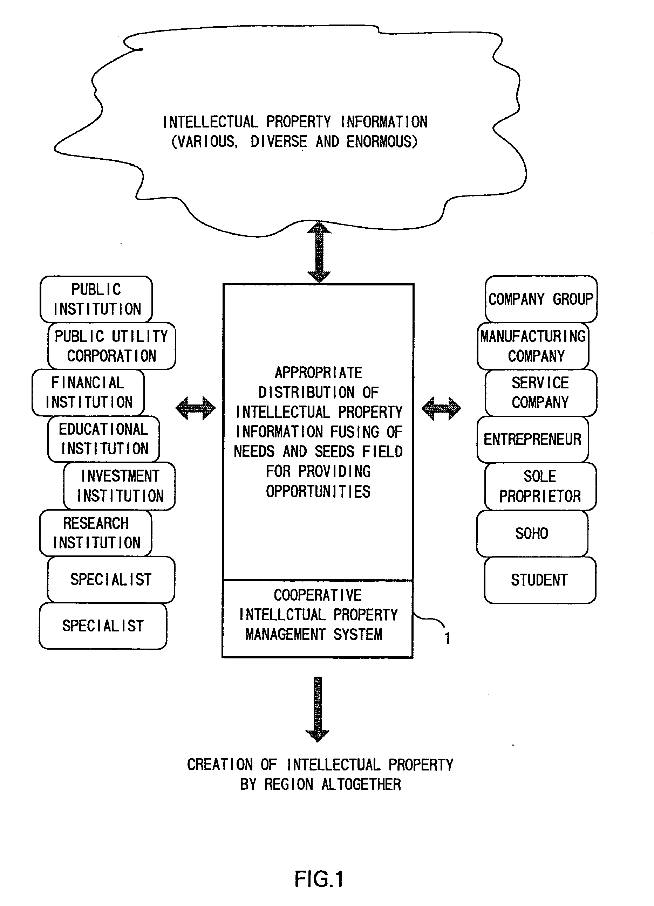

FIG. 1 is a view explaining a concept of the cooperative intellectual property management system of the present invention. For example, this cooperative intellectual property management system 1 is one that narrows various, diverse and enormous intellectual property information and distributes the narrowed information through electronic media such as a browser and electronic mail not only to laboratories (instructors) inside of each university but also to companies and persons outside of the university, which have bases or live in a region where each university exists, in cooperation of intellectual property management systems individually placed in plural universities. The companies and the persons include company groups, manufacturing companies, service companies, entrepreneurs, sole proprietors, SOHOs, and students.

Moreover, the cooperative intellectual property management system also accepts accesses from public institutions, public utility corporations, financial institutions, educational institutions, investment institutions, research institutions, and specialists such as lawyers and patent attorneys, and also electronically forms a field for providing opportunities of flotation consultations and advertisements. As described above, by forming the field for distributing the intellectual property information and for providing the opportunities, business needs or needs for creating intellectual properties, which are inherent in the companies and the like outside of the university, are fused with various seeds inherent in the university, and thus the university and the companies and the like who are demanders for creating the intellectual property are united together, and construct an environment for creating a new intellectual value.

As the "intellectual property information", mainly assumed is patent information such as Japanese domestic publications including patent laid-open publications, examined patent publications, patent publications and other publications, and such as foreign publications of patents and the like. However, not only the patent information as described above but also information regarding trademark rights, design rights and copyrights, technical information such as technical reports, and information on non-patent documents, which is provided by the CSDB (computer software database) of the Japanese Patent Office, and the like can be included. In the case of the trademark rights, a portion of a "patent" among constituent elements of the system to be described later is replaced by a "trademark". Also for the design rights, the copyrights and the like, the system may be operated according to a similar rule while replacing terms.

### [Entire configuration of cooperative intellectual property management system]

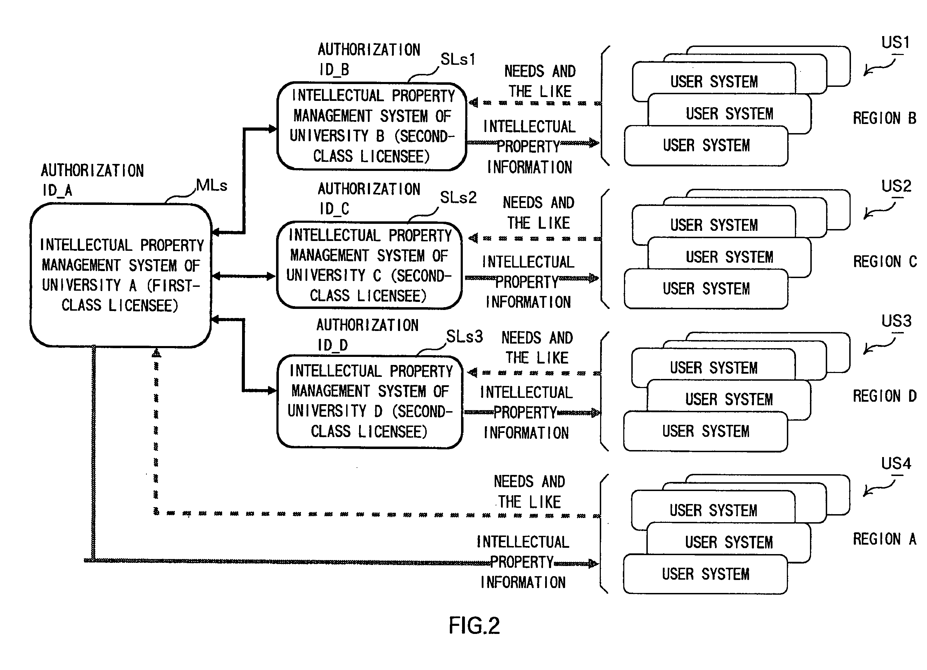

As shown in FIG. 2, the cooperative intellectual property management system 1 is configured by connecting, to the Internet, a first intellectual property management system MLs provided in a first-class licensee, and plural second intellectual property management systems SLs1, SLs2 and SLs3 which are provided in second-class licensees and operate in cooperation with the first intellectual property management system MLs.

The first-class licensee is a licensee who has an authority to give sub-licenses for the system use to third parties, and the second-class licensees are licensees given the sub-licenses from the first-class licensee. In this example, it is assumed that a university A existing in a region A is the first-class licensee, and holds a blanket policy to individually authorize an intellectual property headquarter (office) and plural laboratories (instructors) for the system use.

Moreover, in this example, among the second-class licensees, a university B existing in a region B, a university C existing in a region C, and a university D existing in a region D, are the second-class licensees who assist the creation of the intellectual property in cooperation with the university A. As in the university A, it is assumed that each of the universities B, C and D holds a blanket policy to individually authorize an intellectual property headquarter (office) and plural laboratories (instructors) for the system use.

Note that the first-class licensee and the second-class licensees are not necessarily limited to the universities, and may be companies, company groups and other institutions.

The first intellectual property management system MLs is an information providing system composed of a Web server (that stands for a "World Wide Web server"; a computer that provides contents to be browsed by browsers) loaded with a computer program of the present invention. The computer program is one loaded into the Web server through the Internet or a portable recording medium such as a CD-ROM and a DVD-ROM. This computer program is read and executed by a processor of the Web server, and constructs various functions regarding a license management and an intellectual property information management in the Web server.

In the inside of the university A, the first intellectual property management system MLs constructs an intranet among an operation terminal provided in the intellectual property headquarter and operation terminals provided in the respective plural laboratories. In the first intellectual property management system MLs, an authorization ID_A is set. Also in the respective operation terminals connected to the intranet, authorization IDs unique in the intranet are set individually.

The second intellectual property management systems SLs1, SLs2 and SLs3 may substantially be general-purpose computer systems each of which has a communication function and a browser function. Also for each of the computer systems, an intranet is constructed in the inside of the university. In the second intellectual property management system SLs1 provided in the university B, an authorization ID_B is set. In the second intellectual property management system SLs2 provided in the university C, an authorization ID_C is set. In the second intellectual property management system SLs3 provided in the university D, an authorization ID_D is set. Also in the respective operation terminals connected to the intranet of each university, authorization IDs unique in the intranet are set individually.

Moreover, to the second intellectual property management system SLs1, plural user systems US1 existing in the region B are also connected through the Internet. The respective user systems US1 are terminals owned by parties who have demands for the creation of the intellectual properties, for example, the company groups, the manufacturing companies, the service companies, the entrepreneurs, the sole proprietors, the SOHOs, and the students in the outside of the university. These terminals may be general-purpose personal computers each of which has the communication function and the browser function. In a similar way, to the second intellectual property management system SLs2, plural user systems US2 existing in the region C are connected, to the second intellectual property management system SLs3, plural user systems US3 existing in the region D are connected, and to the first intellectual property management system MLs, plural user systems US4 existing in the region A are connected.

From the user systems US1 to US4, various kinds of needs information including requests to provide the intellectual property information are transmitted to the intellectual property management systems MLs, SLs1, SLs2 and SLs3 through the electronic mails or the browsers. The intellectual property management systems MLs, SLs1, SLs2 and SLs3 distribute the intellectual property information to the user systems US1 to US4. Such "distribution of the intellectual property information" means that the browsers of the user systems US1 to US4 are allowed to browse the intellectual property information, and to download the intellectual property information, if necessary.

One of features of the cooperative intellectual property management system 1 is that, based on the sub-license contract, the first intellectual property management system MLs searches the intellectual property information in place of the second intellectual property management systems SLs1, SLs2 and SLs3, and distributes a search result thereto while showing the search result as if the second intellectual property management systems SLs1, SLs2 and SLs3 performed the search. Specifically, the first intellectual property management system MLs distributes screens of the browsers while customizing the screens for the second intellectual property management systems SLs1, SLs2 and SLs3. In such a way, configurations of the second intellectual property management systems SLs1, SLs2 and SLs3 can be simplified. In the description below, each of the customized browser screens is referred to as "my page".

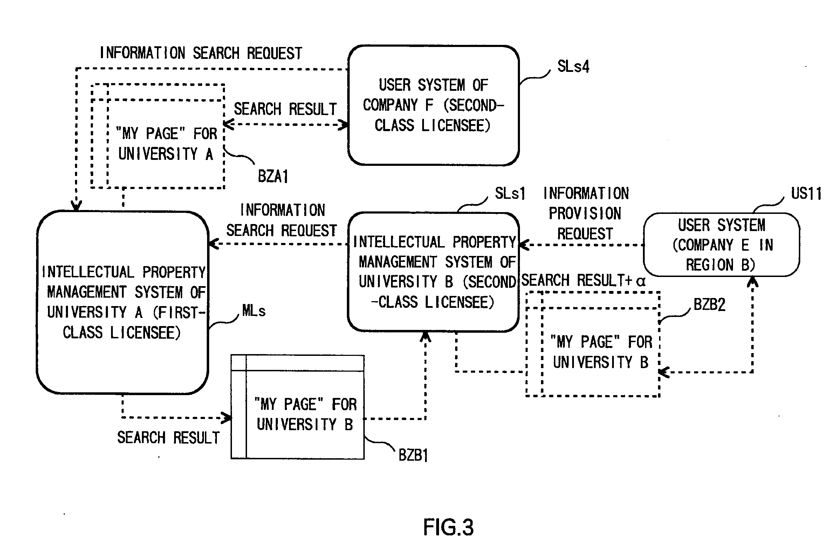

An example of the "my page" is described as below. For example, as shown in FIG. 3, it is assumed that a certain user system US11 in the region B has made a request to provide the information to the second intellectual property management system SLs1 of the university B through the electronic media such as the electronic mail. It is assumed that a keyword for preparing the search formula, and the like, are included in the request to provide the information. The second intellectual property management system SLs1 makes a request to search the information, which includes the contents of the request from the user system US11, to the first intellectual property management system MLs through the electronic media such as the electronic mail in a similar way.

By analyzing the contents of the request to search the information, the first intellectual property management system MLs prepares a search formula prepared by estimating a demand of the information requester, and searches intellectual property information corresponding thereto. Then, the first intellectual property management system MLs edits a search result, does layout thereof into "my page" BZB1 for the university B, and transmits this "my page" BZB1 to the second intellectual property management system SLs1. According to needs, the second intellectual property management system SLs1 adds intellectual property-related information inherent in the university B or the region B to the "my page" BZB1, and publishes the "my page" BZB1. In such a way, the user system US11 can acquire desired intellectual property information from the second intellectual property management system SLs1 without being conscious of the existence of the first-class intellectual property management system MLs.

Note that, as shown in an upper portion of FIG. 3, even if a party is the second-class licensee, if the party is one who does not have necessity to make cooperation for the purpose of assisting the creation of the intellectual property, for example, is a company F provided with a user system SLs4, and if the company F makes an information search request, then the first-class intellectual property management system MLs can make layout of a search result into "my page" BZA1 for the university A, and can distribute the search result to the user system SLs4. Whether or not the party who has made the information search request is a second-class licensee who makes the cooperation is identified by, for example, the licensee ID or the authorization_ID.

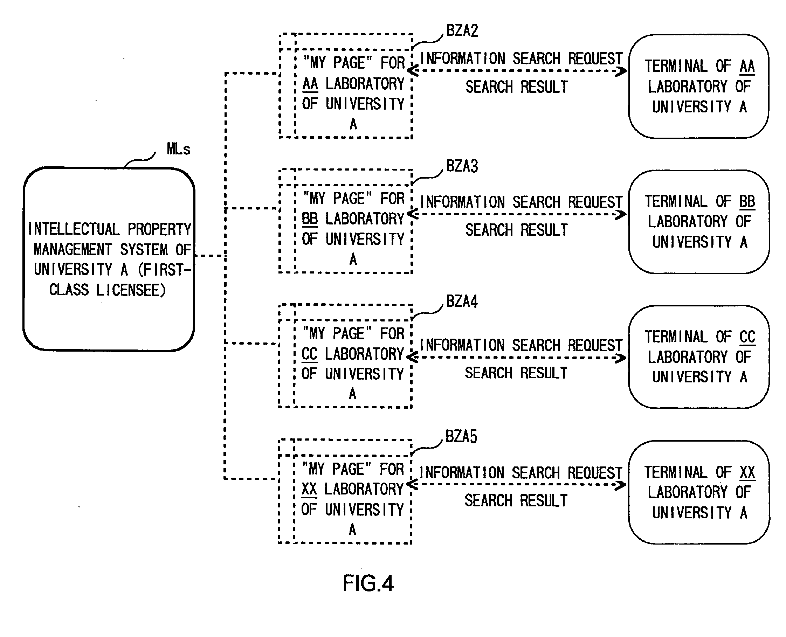

With regard to terminals of the respective laboratories in the inside of the university, which are connected to the first intellectual property management system MLs through the intranet, as shown in FIG. 4, the first intellectual property management system MLs accepts information search requests therefrom individually through "my pages" BZA2, BZA3 and BZA4 for the laboratories or electronic mails, and publishes search results on the respective "my pages" BZA2, BZA3 and BZA4. In such a way, the respective laboratories can get familiar with the search of the intellectual property information, and the like.

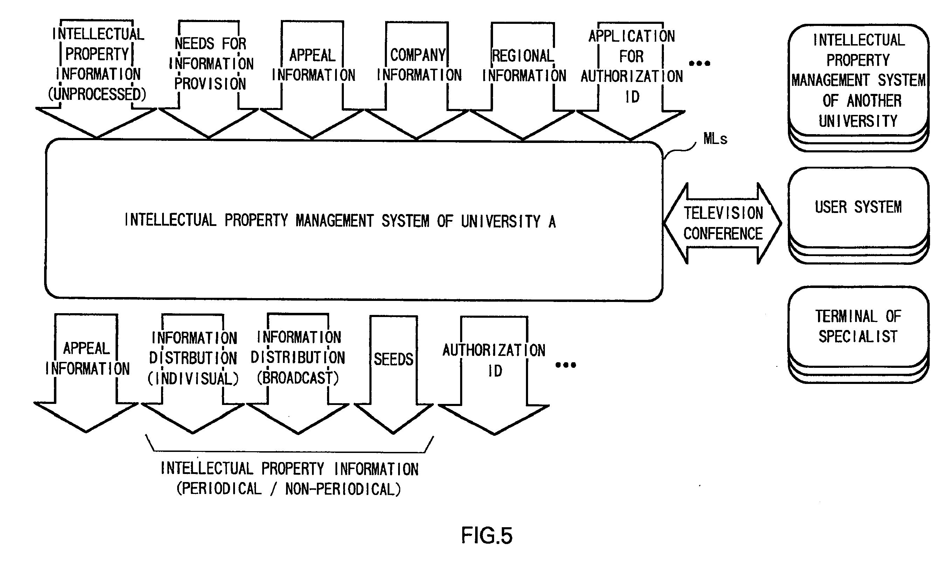

In terms of relationships with the second intellectual property management systems SLs1, SLs2 and SLs3, the first intellectual property management system MLs operates as described above. In addition, the first intellectual property management system MLs has various functions regarding the assistance to create the intellectual property by a region concerned together. An outline of information inputted/outputted to/from the first intellectual property management system MLs and institutions connected thereto is shown in FIG. 5.

Specifically, the first intellectual property management system MLs performs predetermined conditional checks for applications of the second-class licensees, that is, applications of the authorization IDs, and then issues the authorization IDs. Moreover, the first intellectual property management system MLs publishes regional information, company information, appeal information and needs for information provision, which are received from the intellectual property management or user systems connected thereto, and further the intellectual property information (unprocessed intellectual property information) obtained by the search, and the like, periodically or non-periodically, on a shared page accessible by the second intellectual property management systems SLs1, SLs2 and SLs3 and the user systems US1 to US4, and on a dedicated page accessible only by one or some systems. Alternatively, the first intellectual property management system MLs provides the intellectual property information and the like by the electronic mails. In such a way, the first intellectual property management system MLs forms the above-described "field for providing opportunities". The "appeal information" is, for example, information proposed by the university, the company or the like, which appeals itself.

Moreover, by using an internet television technology, the first intellectual property management system MLs holds a television conference with the second intellectual property management systems SLs1, SLs2 and SLs3, the user systems US1 to US4, specialist terminals operated by the specialists such as the lawyers and the patent attorneys, and other plural terminals. The television conference is held for the purpose of a dialogue search to be described later, an advice for creating the intellectual property, or the like.

### [Configuration of first intellectual property management system]

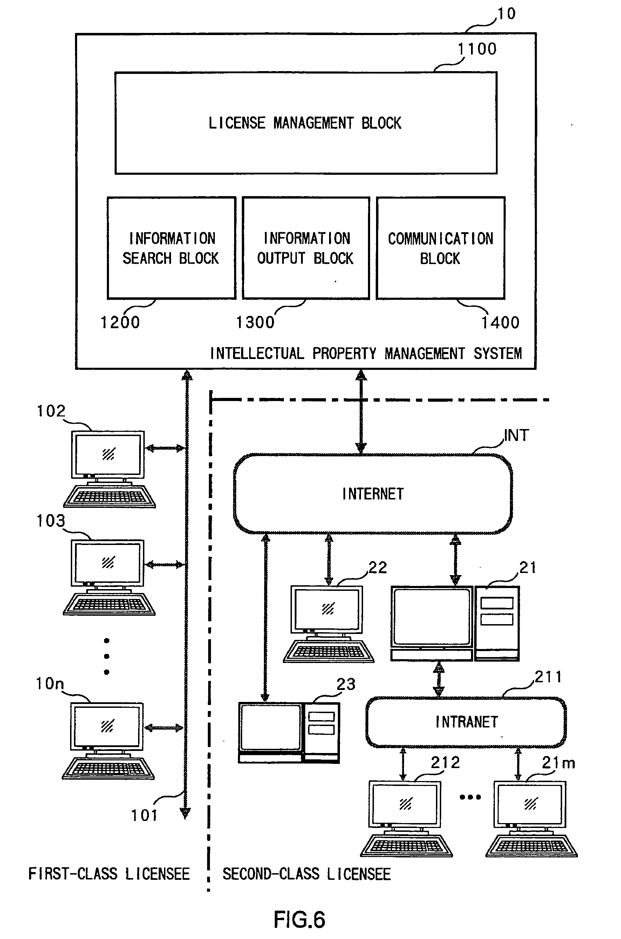

Here, a specific configuration example of the Web server that operates as the first intellectual property management system MLs is described with reference to FIGS. 6 to 24. This Web server is one intellectual property management system that serves as one constituent element of the cooperative intellectual property management system 1, and accordingly, is described as an intellectual property management system 10 for the sake of convenience.

FIG. 6 is a view showing a connection relationship between the intellectual property management system 10 and the other terminals and the like connected to this intellectual property management system 10.

Being broadly divided, the intellectual property management system 10 includes functional blocks which are: a license management block 1100; an information search block 1200; an information output block 1300; and a communication block 1400. To the intellectual property management system 10, a terminal 102 provided in the intellectual property headquarter and terminals 103... 10n provided in the respective laboratories, the headquarter and the laboratories becoming constituent members of the first-class licensee, are connected through a local area network 101. In such a way, an intranet is constructed.

Moreover, to the intellectual property management system 10, various computer systems and terminals provided in the second-class licensees, for example, a computer system 21 that operates as the second intellectual property management system SLs1 of the university B and terminals 22 and 23 which operate as the user system SLs4 of the above-described company F are connected through the Internet INT. To the computer system 21, an intranet 211 that interconnects plural terminals 212... 21m provided in the laboratories and the like in the inside of the university is connected.

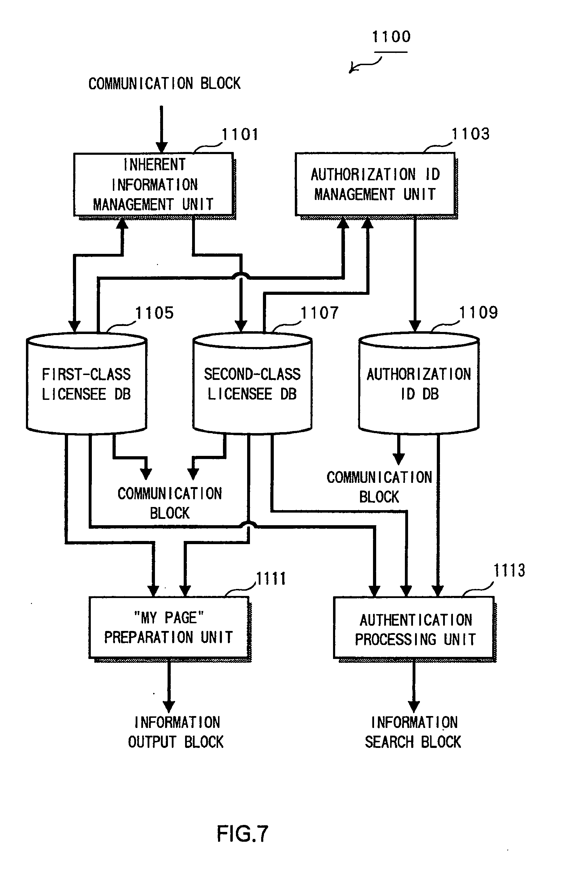

FIG. 7 is a functional configuration diagram of the license management block 1100 owned by the intellectual property management system 10. The license management block 1100 includes an inherent information management unit 1101.

The inherent information management unit 1101 manages inherent information regarding the first-class licensee and the second-class licensee, which is inputted from a data input device to be described later.

First inherent information regarding the first-class licensee is, for example, a name of the university A, names of the constituent members (intellectual property headquarter, respective laboratories) included in the blanket policy, information on the respective contact addresses thereof, which includes electronic mail addresses, first authorization information including passwords set for the constituent members of the university A, a first license condition including a scope of the system use permitted for the respective members by the licenser and data necessary to use the system, and the like.

Second inherent information regarding the second-class licensee is, for example, names of the university B, the university C, the university D, the companies and the like, information on contact addresses thereof, second authorization information including passwords set for the constituent members of the respective universities, the companies or the like, a second license condition derived from the first license condition, that is, obtained by copying or partially revising the first license condition.

The inherent information management unit 1101 stores the first inherent information in a first-class licensee DB 1105, and stores the second inherent information in a second-class licensee DB 1107.

The license management block 1100 also includes an authorization ID management unit 1103. This authorization ID management unit 1103 extracts information regarding the authorization IDs from among the respective pieces of information stored in the first-class licensee DB 1105 and the second-class licensee DB 1107, represents information as to from which first-class licensee which second-class licensee is given the sub-license by correlations of the authorization IDs, and stores results thereof in an authorization DB 1109.

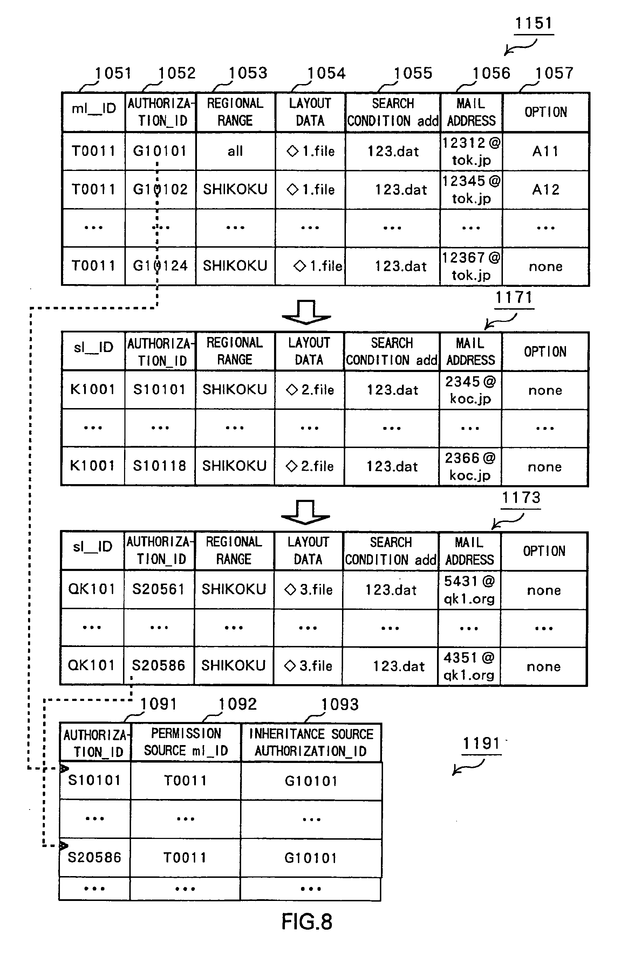

FIG. 8 shows content examples of the first-class licensee DB 1105, the second-class licensee DB 1107 and the authorization ID DB 1109. The uppermost portion of FIG. 8 is a first inherent information field 1151 for the first-class licensee, which is stored in the first-class-licensee DB 1105.

In the first inherent information field 1151, provided for each of the constituent members of the first-class licensee (in this example, a clerk of the intellectual property headquarter and laboratories of the university A) are: a license ID 1051 that represents that the member belongs to the university A as the first-class licensee; an authorization_ID 1052 that is an ID for identifying an operator according to the contract and also serves as a login password; a regional range 1053 that represents a regional range where it is possible to use the system; an address 1054 of a layout data file for preparing the "my page"; an address 1055 of a memory area where the search condition and the like are recorded; a mail address 1056; and an option 1057. The option 1057 represents, for example, whether the member is one that has the authority to give the sub-license, or whether the member is one that has an authority to design a default "my page" independently.

An intermediate portion of FIG. 8 is a second inherent information field 1171 for a certain second-class licensee, which is stored in the second-class licensee DB 1107. Items of this second inherent information field 1171 are similar to those of the first inherent information field 1151.

In the first inherent information field 1151 and the second inherent information field 1171, a set of the licensee ID and the authorization_ID or either one of the licensee ID and the authorization_ID becomes a use authorization in each constituent member recorded in the first inherent information field 1151 concerned. Among such use authorizations, the use authorization set for the second-class licensee is correlated with a use authorization set for the first-class licensee, and for example, is managed as a use authorization in a lower layer of the use authorization set for the first-class licensee. In such a way, it becomes possible for the licenser to grasp a relationship between the first-class licensee and the second-class licensee at an arbitrary point of time.

The license condition permitted for the first licensee from the licenser and the license conditions permitted for the second-class licensees from the first-class licensee are specified by contract period information recorded in an unillustrated area, information recorded in the regional range 1053, a search condition recorded in an area specified by the address 1055, and the like. The search condition and the like are, for example, a scope and kind of information that can be provided, a combination pattern of usable search conditions, a combination rule of the search conditions, a preparation rule of the search formulas, and the like.

Among these license conditions, one set for the first-class licensee is referred to as the first license condition, and ones set for the second-class licensees are referred to as the second license conditions. The second license conditions become ones which inherit a part or all of the first license condition because the second license conditions are associated with the sub-licenses. Inheriting the license condition as described above is referred to as "inheritance".

Note that, though not shown, each of the license IDs 1051 stored in the first-class licensee DB 1105 and the second-class licensee DB 1107 is linked with, for example, an address of a detailed information recording area for an institution name of each licensee (for example, university A). Moreover, the authorization_ID 1052 is linked with an address of detailed information recording area for the name, affiliation (laboratory name or the like), special domain and the like of the constituent member. By using these IDs as keys, it is made possible to read the information from the individual detailed information recording areas.

The lowermost portion of FIG. 8 is an authorization information field 1191 for a certain second-class licensee, which is stored in the authorization DB 1109. In this authorization information field 1191, provided are: an authorization_ID 1091 of the second-class licensee; a license ID 1092 of the first-class licensee as a permission source; and an authorization ID 1093 of a first-class licensee as an inheritance source.

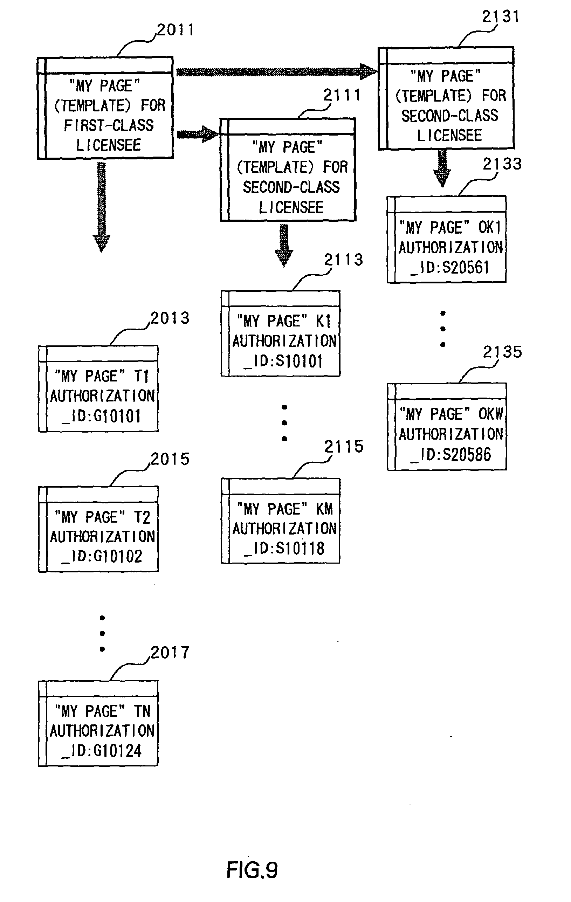

The license management block 1100 further includes a "my page" preparation unit 1111 and an authentication processing unit 1113. The "my page" preparation unit 1111 is one that prepares the "my pages" for the first-class licensee and the second-class licensees. With regard to the "my pages", as shown in FIG. 9, based on a "my page" template 2011 for the first-class licensee, "my page" templates 2111 and 2131 for the second-class licensees are prepared, and further, the layout data files 1054 for the constituent members of the first-class licensee and the constituent members of the second-class licensees are revised, and "my pages" intrinsic thereto (which are "my pages" 2013, 2015, 2017, 2113, 2115, 2133 and 2135) are prepared.

The authentication processing unit 1113 authenticates whether a party who operates a terminal accessing the license management block 1100 has a legal authority with reference to various authorities stored in the authorization DB 1109.

The "my pages" prepared in the "my page" preparation unit 1111 are outputted to the information output block 1300. Meanwhile, authentication results by the authentication processing unit 1113 are outputted to the information search block 1200.

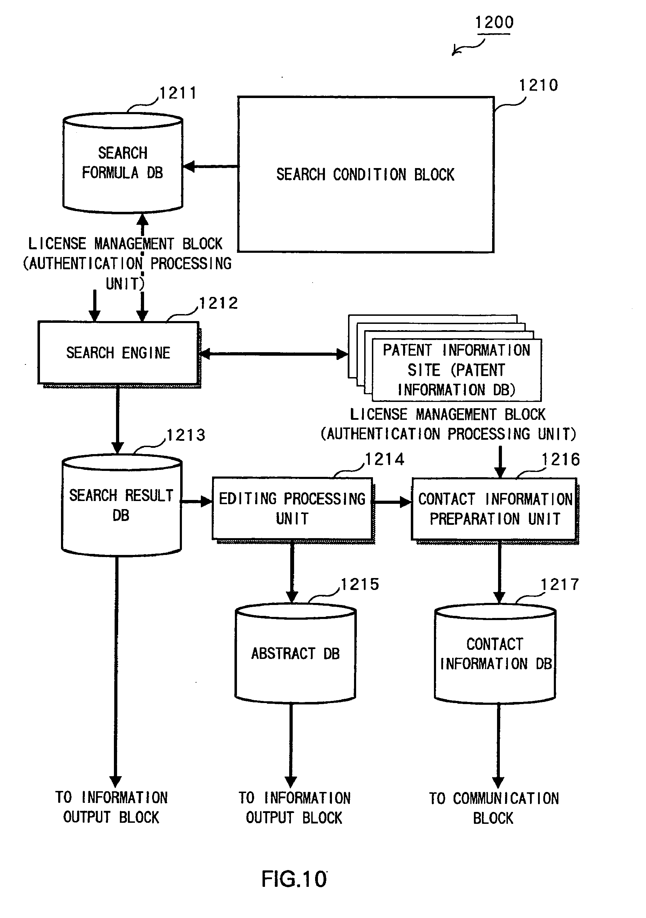

As shown in FIG. 10, the information search block 1200 includes a search condition block 1210 for preparing the search formulas and storing the prepared search formulas in a search formula DB 1211. Moreover, the information search block 1200 includes a search engine 1212 that searches information, for example, for each theme from a patent information site providing patent information among the intellectual property information or from an illustrated internal patent information DB based on the search formula stored in the search formula DB 1211 and on the identification information of the party authenticated by the authentication processing unit 1113, and that stores a result of the search in a search result DB 1213. Moreover, the information search block 1200 includes an editing processing unit 1214 that edits the search result, creates an abstract for each of the patent information, stores the abstract in an abstract DB 1215, and that prepares information such as the number of hits for each theme. Furthermore, the information search block 1200 includes a contact information preparation unit 1216 that prepares contact information including information such as the number of hits by the search, and stores the contact information in a contact information DB 1217.

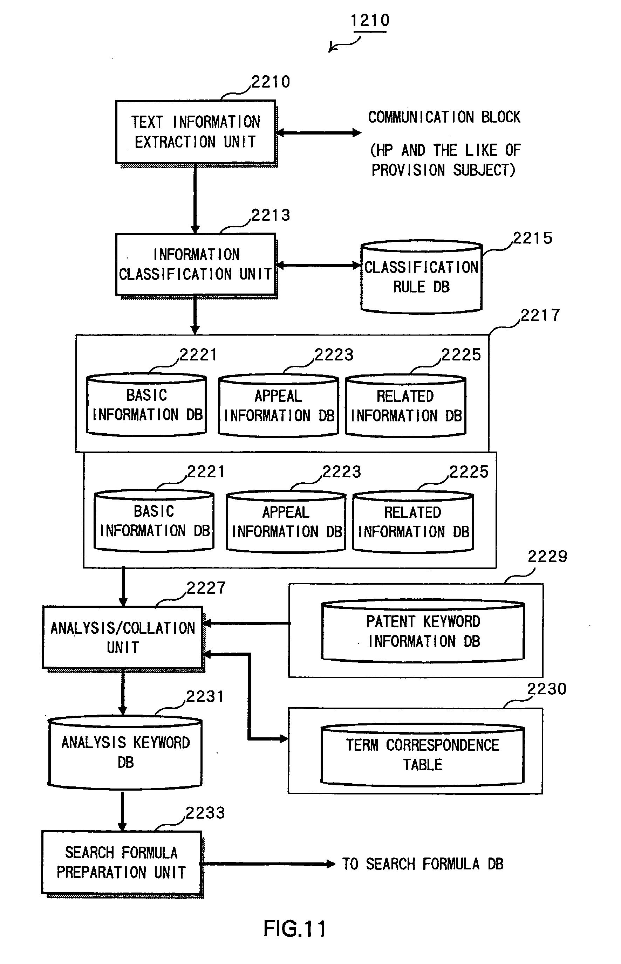

As shown in FIG. 11, the search condition block 1210 includes a text information extraction unit 2210 that extracts text information from an HP and the like of a provision subject, which are acquired through the communication block 1400, and includes an information classification unit 2213 that classifies the extracted text information into basic information, appeal information and related information of the provision subject according to a classification rule 2215, and stores the basic information in a basic information DB 2221, the appeal information in an appeal information DB 2223, and the related information in a related information DB 2225.

The basic information is information that does not directly relate to technical information and is intrinsic to an organization of the provision subject. The appeal information is information which the organization claims to the outside. The related information is information regarding a technology which the organization relates to.

The classification rule is a rule for identifying as to which of the basic information, the appeal information and the related information, which are described above, items included in the text information correspond to. For example, according to the classification rule, in the case where the item is a noun such as a technical term, a product name and a usage purpose, the item is classified into the related information, in the case where the item is approximate to an aspect of an appeal sentence prepared in advance, the item is classified into the appeal information, in the other case, the item is classified into the basic information, and so on. For each provision subject, and as common terms, the basic information is stored in the basic information DB 2221, the appeal information is stored in the appeal information DB 2223, and the related information is stored in the related information DB 2225.

Moreover, the search condition block 1210 includes an analysis/collation unit 2227. This analysis/collation unit 2227 is one that analyzes degrees of collations between search keywords stored in a patent keyword information DB 2229 for each pieces of the patent information in advance and the basic information, the appeal information and the related information with reference to a term correspondence table 2230, prepares analysis keywords, and stores the analysis keywords in an analysis keyword DB 2231.

The search condition block 1210 further includes a search formula preparation unit 2233. This search formula preparation unit 2233 prepares search formulas for periodical distribution based on the analysis keywords stored in the analysis keyword DB 2231, and stores the search formulas in the search formula DB 1211 (FIG. 10) together with the identification information of the provision subject.

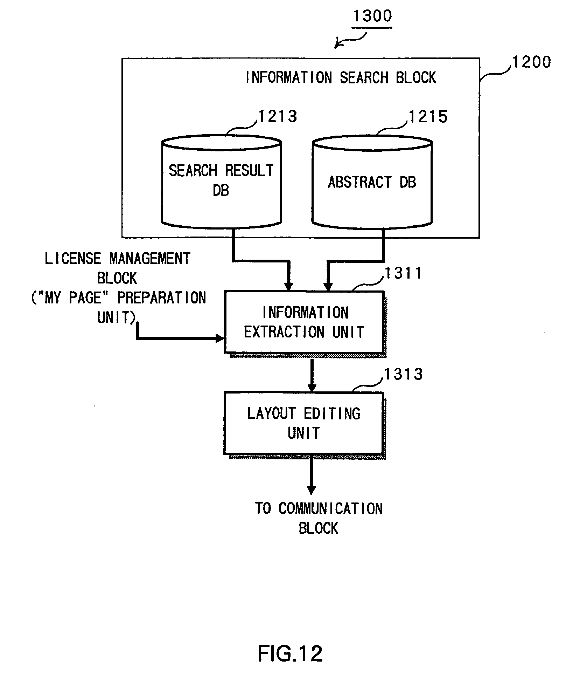

As shown in FIG. 12, the information output block 1300 includes an information extraction unit 1311, and a layout editing unit 1313. The information extraction unit 1311 is one that extracts the search result for the provision subject from the search result DB 1213 and the abstract DB 1215. The layout editing unit 1313 is one that performs processing for publishing the extracted search result on each browser screen customized for each of the constituent members of the first-class licensee and the second-class licensees. A processing result of the layout editing unit 1313 is transmitted to the communication block 1400.

The communication block 1400 exists mainly for the purpose of forming the above-described opportunity providing field, and for the purpose of providing a tool for performing the search of the intellectual property information more accurately.

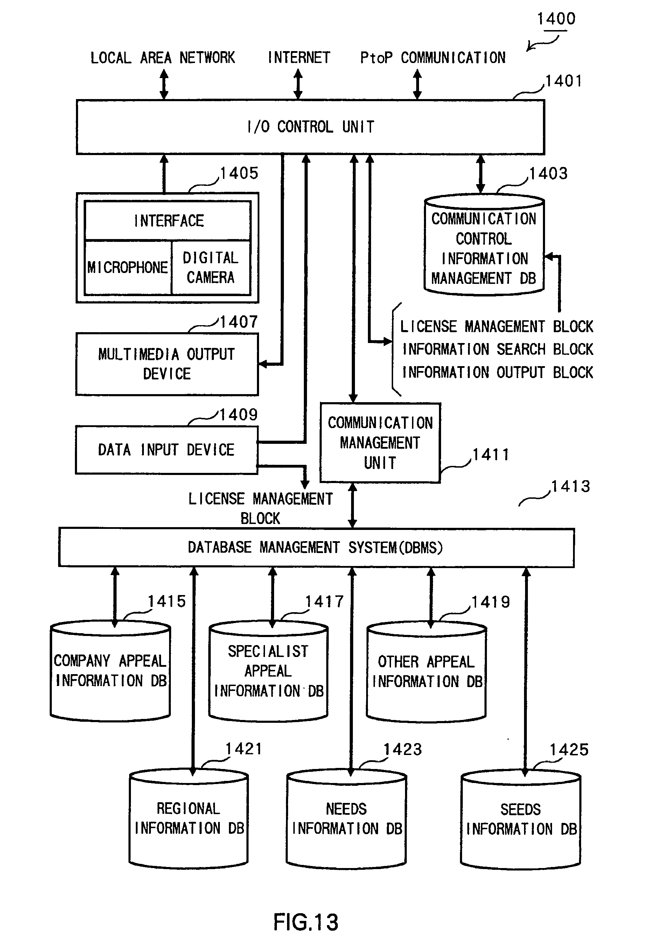

A configuration of this communication block 1400 is as shown in FIG. 13. Specifically, the communication block 1400 includes an I/O control unit 1401 for enabling connections thereof to the local area network 101 and the Internet INT, which are shown in FIG. 6, and to a PtoP (peer-to-peer) network.

This I/O control unit 1401 performs a two-way communication with a party on the other end based on communication setting information such as protocol for each of the parties on the other end, which is recorded in a communication control information management DB 1403. To the I/O control unit 1401, connected are: a conversation device 1405 including a digital camera, a microphone, and an interface thereof; a multimedia output device 1407 composed by including a display and a microphone; and a data input device 1409 composed by including a keyboard and a mouse.

The conversation device 1405 and the multimedia output device 1407 are devices for enabling, for example, the internet television conference, and the data input device 1409 is a device for receiving the inherent information of the above-described first-class licensee and second-class licensees.

Moreover, the communication block 1400 includes a communication management unit 1411, and a database management system (DBMS) 1413. The communication management unit 1411 is one that forms, for example, an electronic bulletin board. The DBMS 1413 stores data in a company appeal information DB 1415, a specialist appeal information DB 1417, an other appeal information DB 1419, a regional information DB 1421, a needs information DB 1423 , and a seeds information DB 1425, and reads the data.

### [Summary of operations of intellectual property management system]

Next, an example of a flow when the above-described intellectual property management system 10 is operated as the first intellectual property management system MLs provided in the university A is described.

### {First-class licensee registration processing}

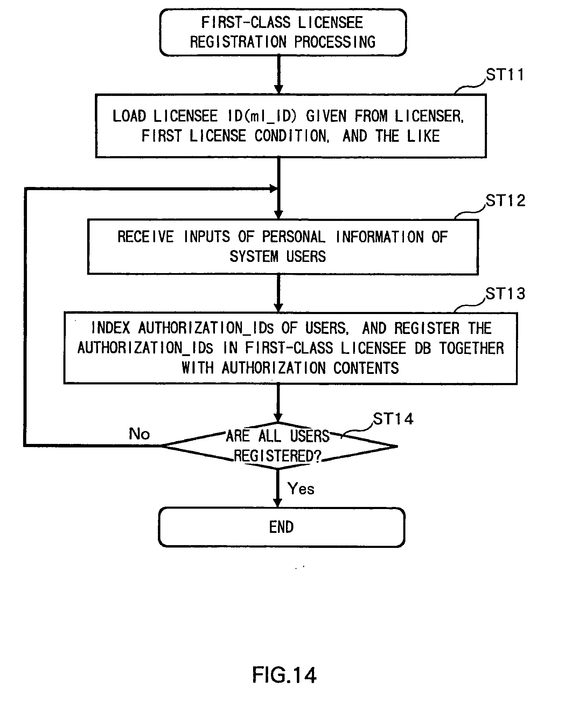

FIG. 14 is a flowchart of first-class licensee registration processing.

The first intellectual property management system MLs loads licensee IDs (ml_ID) given from the licenser, the first license condition, viewer software for displaying the "my page", and the like (ST11), and receives inputs of personal information of the users of the system, that is, the clerk of the intellectual property headquarter, clerks of the laboratories, and the like of the university A (ST12). The first intellectual property management system MLs indexes the authorization_IDs of the individual users, and registers the authorization_IDs in the first-class licensee DB 1105 together with the authorization contents (ST13). The first intellectual property management system MLs repeats this flow for all the users of the university A (ST14: No).

### {Second-class licensee registration processing}

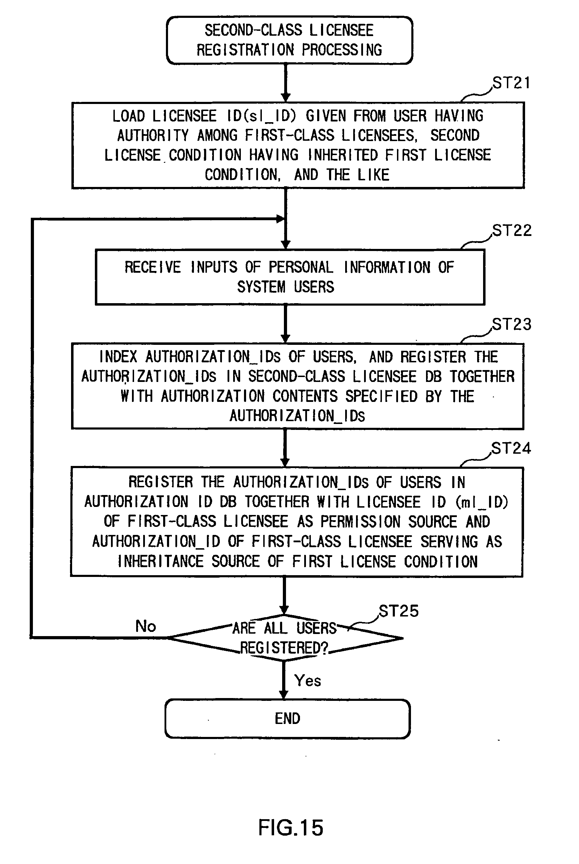

FIG. 15 is a flowchart of second-class licensee registration processing.

The first intellectual property management system MLs loads licensee IDs (sl_ID) given from the user having the authority among the first-class licensees, the second license condition, the viewer software for displaying the "my page" (ST21), and receives inputs of personal information of the users of the system, that is, the clerk of the intellectual property headquarter, clerks of the laboratories, and the like of the university B (ST22). The first intellectual property management system MLs indexes the authorization_IDs of the individual users, and registers the authorization_IDs in the second-class licensee DB 1107 together with the authorization contents (ST23). Moreover, the first intellectual property management system MLs registers the authorization_IDs of the users in the authorization ID DB 1109 together with the licensee ID (ml_ID) of the first-class licensee as the permission source and the authorization_ID of the first-class licensee serving as the inheritance source (ST24).

The first intellectual property management system MLs repeats this flow for all the users (ST25: No).

### {Search formula preparation processing}

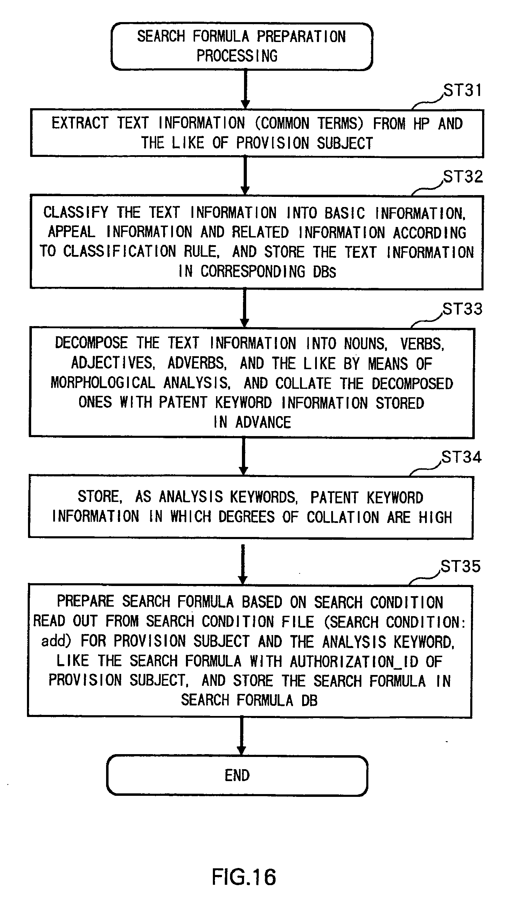

FIG. 16 is a flowchart of search formula preparation processing. In usual, this processing is executed when determining the search formula for use in the periodical distribution of the patent information for each theme. However, this processing is executable similarly also when preparing search a formula in non-periodical distribution.

The first intellectual property management system MLs extracts the text information from the homepage (HP) of the provision subject, for example, the company existing in the region A, which is provided with the user system US4 (ST31). In order to appropriately grasp the common terms, the first intellectual property management system MLs extracts text information as much as possible in a range as wide as possible from the provision subject concerned. Instead of accessing the homepage, the first intellectual property management system MLs may extract the text information from electronic mail received from the provision subject or digitized PR information.

The first intellectual property management system MLs classifies the text information thus extracted into the basic information, the appeal information and the related information according to the classification rule, and stores the respective pieces of the classified information in the DBs corresponding thereto (ST32). The classification rule and the like are as described above. Thereafter, the first intellectual property management system MLs decomposes each piece of the classified text information into plural phrases by means of, for example, a publicly known morphological analysis. The first intellectual property management system MLs collates the extracted phrases with phrases for use in the patent keyword information stored in advance with reference to the term correspondence table 2230 that represents a correspondence relationship between the patent terms and general terms or synonyms in advance (ST33).

Then, the first intellectual property management system MLs stores, as analysis keywords, patent keyword information in which the degrees of collation between the phrases are high in the analysis keyword DB 2231 (ST34). Thereafter, the first intellectual property management system MLs prepares the search formula for the provision subject based on a search condition read out from a search condition file (search condition: add) for the provision subject concerned, for example, a logical condition in the case of a certain phrase, and based on the analysis keyword stored in the analysis keyword DB 2231, links the prepared search formula with the authorization_ID of the provision subject, and stores the search formula in the search formula DB 1211 (ST35).

### {Search and periodical distribution processing}

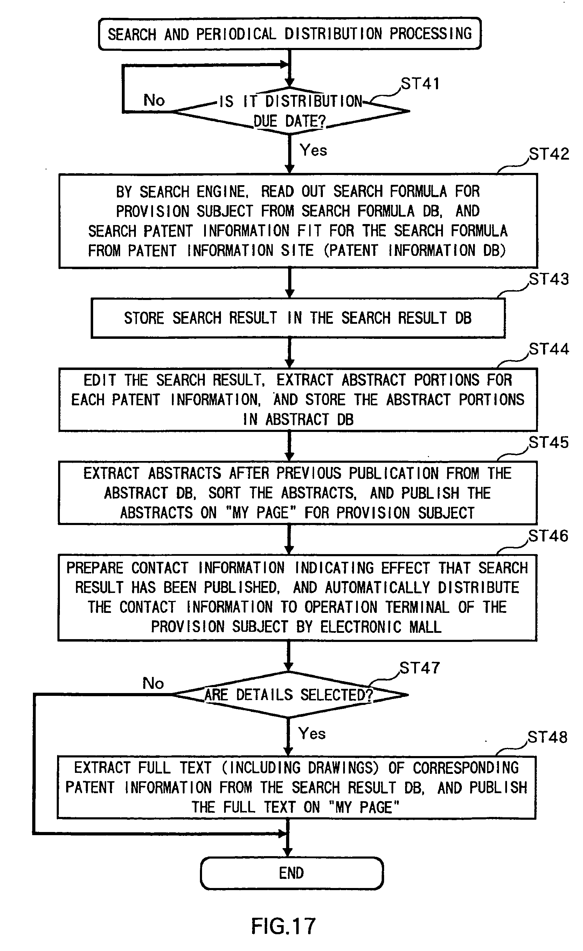

A flow when the patent information is searched in the first intellectual property management system MLs by using the search formula thus prepared and such a search result is distributed to the provision subject is described. FIG. 17 is a flowchart of the search and periodical distribution processing by the first intellectual property management system MLs.

The first intellectual property management system MLs measures current date and time by means of, for example, an internal timer, and has a function to monitor whether or not the current date and time have reached a periodical distribution due date determined by the sub-license contract in advance. Upon sensing, by this function, that the current date and time have reached the distribution due date (ST41: Yes), the first intellectual property management system MLs reads out the search formula for the provision subj ect from the search formula DB 1211, and searches patent information fit for the search formula from the patent information site (or the patent information DB) by means of the search engine 1212 (ST42). Here, it is assumed that the patent information obtained by the search is full text (including drawings) of a patent publication.

The search engine 1212 stores the full text of the patent publication, which is the search result, in the search result DB 1213 by taking plural items of the publication as ones of the patent keywords (ST43). Moreover, the respective patent publications are edited by the editing processing unit 1214, and data of abstract portions thereof, for example, of portions of "abstracts" of the patent publications are extracted. Then, the extracted abstracts are linked with the patent publications stored in the search result DB 1213, and stored in the abstract DB 1215 (ST44). Such link is enabled by, for example, allowing laid-open numbers, patent numbers and the like of both to coincide with each other.

Thereafter, all the abstracts relating to the provision subject are extracted from the abstract DB 1215, sorted in order of numbers assigned to the publications, and published on the "my page" for the provision subject (ST45). Moreover, contact information indicating the effect that the search result for the provision subject has been published on the "my page" is prepared, and this contact information is automatically distributed to the terminal of the provision subject by electronic mail and the like (ST46). In the case where the provision subject who has seen the electronic mail and the like accesses the first intellectual property management system MLs through the terminal of his/her own, browses the abstract published on the "my page", and further selects "details" of the abstract (ST47: Yes), the full text (including the drawings) of the corresponding patent information is extracted from the search result DB 1213, and the full text is published on the "my page" (ST48) . In such a way, the provision subject first confirms by means of the abstract whether or not desired patent information is distributed, and in the case where the desired patent information is distributed, selects the "details" and confirms contents thereof, thus making it possible to access the patent information efficiently.

Here, the "my page" for the provision subject is described in detail.

In a terminal provided in each laboratory in the inside of the university, the first intellectual property management system MLs prepares "my page" with a layout that becomes intrinsic to the laboratory, and publishes the search result of the patent information on this "my page". Moreover, in the second intellectual management systems SLs1, SLs2 and SLs3 of the other universities, which are given the sub-licenses in order to perform the assistance for creating the intellectual property in cooperation, the first intellectual property management system MLs prepares "my pages" for showing as if the information search were performed in the second intellectual property management systems SLs1, SLs2 and SLs3 concerned. Meanwhile, for the terminal or user system of the second-class licensee, who does not have necessity to make cooperation, the first intellectual property management system MLs prepares "my page" for the university A for appealing that the university A is an information transmission source or a service provision source.

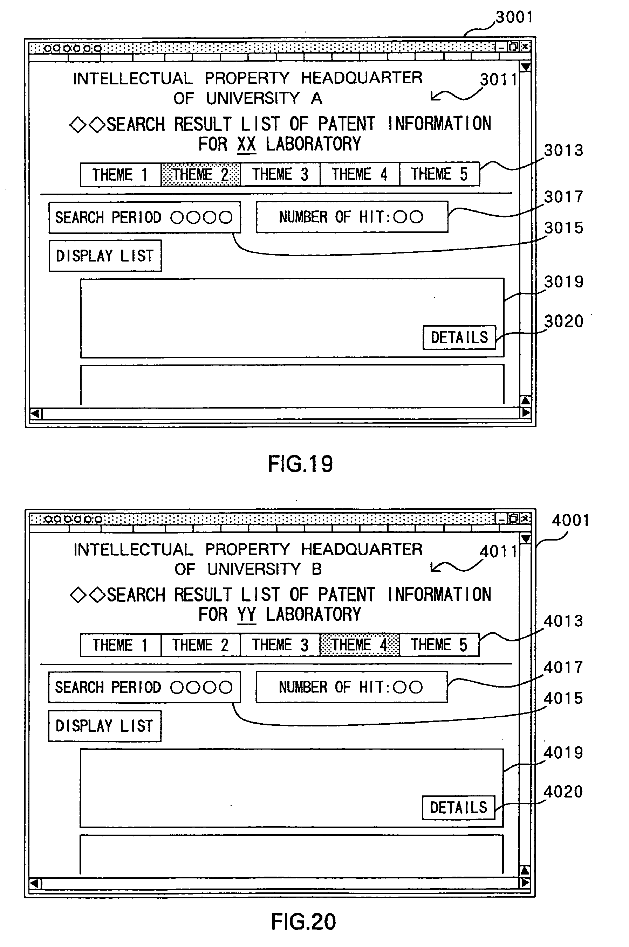

Examples of the "my pages" as described above are shown in FIGS. 19 to 24. FIG. 19 is an explanatory view of the "my page" when the first intellectual property management system MLs distributes the search result of the patent information to the terminal of the laboratory of the university A, which is connected through the intranet.

In this "my page" 3001, on an area 3011 representing the information transmission source, for example, characters "Intellectual Property Headquarter of University A" identified by an authorization_ID recorded in the first-class licensee DB 1105 are displayed, and on an area of the next stage, which represents an information provision destination, a name of a "XX laboratory" identified by the authorization_ID is displayed. A theme selection area 3013 can display the search result for each theme by being clicked. On a search period display area 3015, such things as "today", "one week ago" and "one month ago" are displayed. On a hit number display area 3017, the number of hits in the theme concerned is displayed, and on an abstract display area 3019, the abstract stored in the abstract DB 1215 is displayed. By clicking details 3020 of the abstract display area 3019, the full text of the patent information stored in the search result DB 1213 is displayed in a format of the PDF or the like.

FIG. 20 is an explanatory view of "my page" when, upon receiving a request from the second intellectual property management system SLs1 of the intellectual property headquarter of the university B, the first intellectual property management system MLs distributes the search result of the patent information to the second intellectual property management system SLs1 concerned. In this "my page" 4001, on an area 4011 representing the information transmission source, for example, characters "Intellectual Property Headquarter of University B" identified by an authorization_ID recorded in the second-class licensee DB 1107 are displayed, and on an area of the next stage, which represents an information provision destination, a name of a "YY laboratory" identified by the authorization_ID is displayed. A theme selection area 4013, a search period display area 4015, a hit number display area 4017, an abstract display area 4019 and details 4020 are the same ones as the above-described theme selection area 3013, search period display area 3015, hit number display area 3017, abstract display area 3019 and details 3020, respectively.

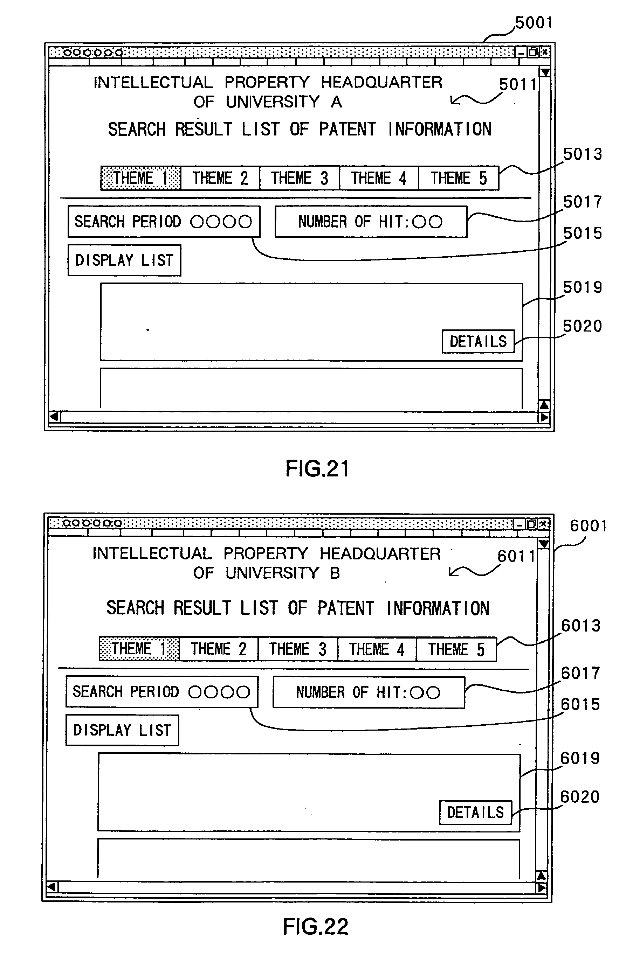

The first intellectual property management system MLs allows the user system US4 to display "my page" 5001 illustrated in FIG. 21 and "my page" 6001 illustrated in FIG. 22.

The "my page" 5001 of FIG. 21 is "my page" to be browsed by the user system US4 of the region A, and the "my page" of FIG. 22 is "my page" to be browsed by the user system US1 through the second intellectual property management system SLs1. The "my page" shown in FIG. 21 is used for both of the second-class licensee and the company F having its base in the outside of the university A. In FIGS. 21 and 22, theme selection areas 5013 and 6013, search period display areas 5015 and 6015, hit number display areas 5017 and 6017, abstract display areas 5019 and 6019 and details 5020 and 6020 are the same ones as the theme selection area 3013, the search period display area 3015, the hit number display area 3017, the abstract display area 3019 and the details 3020, which are shown in FIG. 19, respectively.

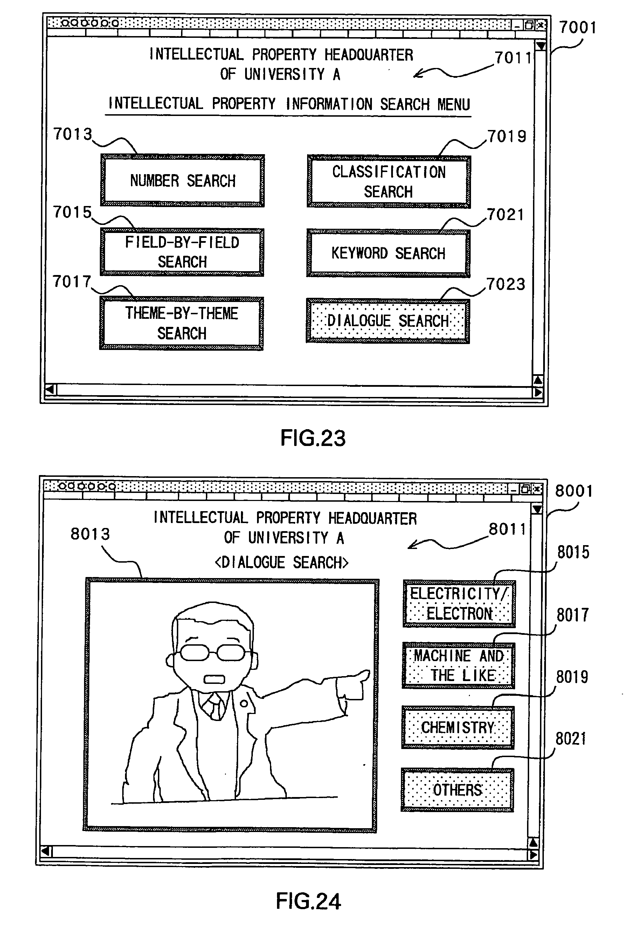

The user system US4 and the like can be allowed also to select search menus. FIG. 23 is "my page" in this case. In this "my page" 7001, on an area 7011 representing a provision source of the selection menu, the characters "Intellectual Property Headquarter of University A" and an "Intellectual Property Information Search Menu" , which are identified by an authorization_ID recorded in the first-class licensee DB 1105, are displayed. Moreover, as the selectable search menus, provided are: a number search 7013; a field-by -field search 7015; a theme-by-theme search 7017; a classification search 7019; a keyword search 7021; and a dialogue search 7023.

When the dialogue search 7023 is selected, the screen shifts to "my page" as shown in FIG. 24. In an area 8001 illustrated in FIG. 24, on an area 8011 representing a provision source of the search menu selection service, the characters "Intellectual Property Headquarter of University A" and "Dialogue Search Menu", which are identified by the authorization_ID recorded in the first-class licensee DB 1105, are displayed. Moreover, on an image area 8013, an image screen of a search specialist, which is projected by the conversation device 1405 provided in the first intellectual property management system MLs, is displayed. Moreover, on the periphery of the image area 8013, technical field specifying areas are displayed. In the illustrated example, an "electricity/electron" field 8015, a "machine and the like" field 8017, a "chemistry" field 8019, and an "others" field 8021 are formed. Based on the image projected on the image screen and the conversation contents, a person who operates the user system US4 and the like first selects any of the above-described areas 8015 to 8021, thus specifying the technical field, and further transmits the common terms and the desired technical field to the specialist, thus preparing the appropriate search formula.

### {Search and non-periodical distribution processing}

Note that the search and distribution of the patent information can also be performed at any time, that is, non-periodically, on an occasion of, for example, receiving the search formula.

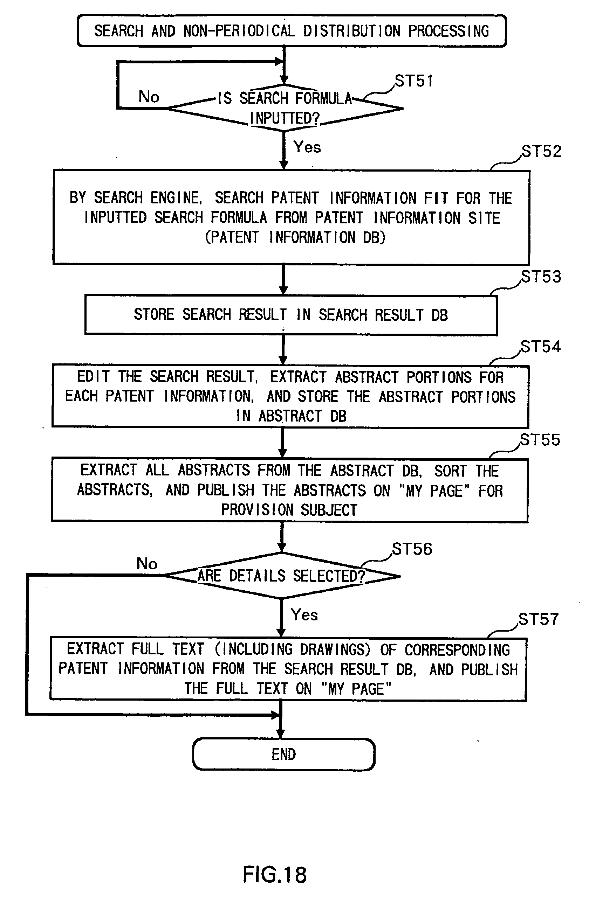

FIG. 18 is a flowchart of the search and non-periodical distribution processing.

For example, upon receiving the search formula (ST51: Yes), the first intellectual property management system MLs searches patent information fit for the received search formula from the patent information site (or the patent information DB) (ST52) . As described above, the first intellectual property management system MLs stores the full text of the patent publication as the search result in the search result DB 1213 (ST53). Moreover, the first intellectual property management system MLs edits the patent publication by the editing processing unit 1214, and extracts the abstract portion. Then, the first intellectual property management system MLs stores the extracted abstract in the abstract DB 1215 (ST54). Thereafter, the first intellectual property management system MLs extracts all the abstracts relating to the provision subject, and sorts the abstracts in order of numbers, and publishes the abstracts on the "my page" for the provision subject (ST55).

In usual, the "my page" in this case becomes one that represents that the intellectual property headquarter of the university A is the information transmission source as shown in FIG. 21. Meanwhile, the "my page" in the case of receiving the information search request from the second intellectual property management system SLs1 becomes one shown in FIG. 22.

In the case where the provision subject accesses the first intellectual property management system MLs or the second intellectual property management system SLs1 through the terminal of his/her own, browses the abstract published in the "my page", and selects "details" of the abstract (ST56: Yes), the provision subject extracts the full text (including drawings) of the corresponding patent information from the search result DB 1213, and publishes the full text on the "my page" (ST57). In such a way, the provision subject first confirms by means of the abstract whether or not the desired patent information is distributed, and in the case where the desired patent information is distributed, selects the "details" and confirms contents thereof, thus making it possible to access the patent information efficiently.

As apparent from the above description, according to the cooperative intellectual property management system 1 of the present invention, the sub-license contract for the system use and the contents thereof can be managed in the first intellectual property management system MLs without troubling the licenser.

Moreover, it is made possible to give the sub-licenses from the first-class licensee to the second-class licensees by using human, economic and regional connections among the licensees. Meanwhile, in each second-class licensee given the sub-license, it becomes possible to use the system even if a large-scale computer system is not introduced, and accordingly, the demand for the license can be expanded easily.

In particular, a university is designated as the first-class licensee, the university gives the sub-licenses to the other universities to increase the second-class licensees, and the intellectual property management systems provided in the respective licensees are operated in cooperation. Thus, the appropriate patent information can be distributed, while being narrowed, not only to the laboratories in the inside of the universities but also to the local companies, the company groups, the entrepreneurs, the sole proprietors, the SOHOs, and the students, who are conscious of creating the intellectual property though not having the searching means of the patent information. In such a way, profit structures of the intellectual property headquarters of the respective universities can be reinforced, for example, while contribution is being made to the local companies in the regions where the respective universities exist.

Moreover, each university prepares the search formula in place of the parties in the outside of the university and the local companies, or assists the preparation of the search formula, and automatically distributes the patent information narrowed by the search formula, thus making it possible to provide the patent information accurately to the companies and the like, which do not have organizations equivalent to the intellectual property headquarter. Moreover, each search formula is made to include the keyword commonly used in the company concerned and the like, and thus the patent information can be made more familiar and understood more deeply, thus making it possible to contribute to a development of a technology of each company's own, an application thereof, promotion of the business, and eventually, creation of a new patent.

As described in the above, according to the present invention, the information providing system added with the sub-license management function becomes, for example, the first intellectual property management system, the terminal and computer system of the second-class licensee given the sub-licenses become, for example, the second intellectual property management systems, and these intellectual property management systems provide appropriate intellectual property information to the demander having the demand for creating the intellectual property in cooperation with each other. Thus, it is made possible to construct the environment for creating a new intellectual value even if the second-class licensees do not newly introduce computer systems for the intellectual property management.

Moreover, it also becomes easy to expand the environment as described above regionally and in terms of field. Furthermore, it is made possible to manage the contents of the sub-license contract when the environment and the like are expanded in such a way without troubling the licenser.

## Claims

1. An intellectual property creation assisting method executed by a cooperative intellectual property management system in which a first intellectual property management and a second intellectual property management system cooperate each other through a computer network, said first intellectual property management system is provided in a first-class licensee and said second intellectual property management system is provided in a second-class licensee to which a sub-license for system use is given from the first-class licensee operate in cooperation with each other through a computer network, the method including the steps of:
making a request, from the second intellectual property management system, for a search of intellectual property information regarding an intellectual property to be created to the first intellectual property management system in response to a request from a second demander having a demand for creating the intellectual property, the demand existing in a region to which the second-class licensee relates;
performing, from the first intellectual property management system, a requested search of intellectual property information in response to a request from a first demander having a demand for creating intellectual property, the demand existing in a region to which the first-class licensee relates, making layout of a search result on a browser screen customized for the first intellectual property management system and displaying the browser screen on a display of a terminal operated by the first demander, and moreover, searching the intellectual property information requested from the second intellectual property management system, and making layout of a search result on a browser screen customized for the second intellectual property management system and distributing the search result to the second intellectual property management system; and
displaying, by the second intellectual property management system, the browser screen on a display of a terminal operated by the second demander, whereby the first intellectual property management system and the second intellectual property management system provide the intellectual property information to the first demander and the second demander in cooperation with each other.

2. The intellectual property creation assisting method according to claim 1,
wherein the first intellectual property management system is provided in a university, and the second intellectual property management system or the terminal is provided in another university, or a company, a sole proprietor or an entrepreneur having a base in the same region where the first-class licensee exists.

3. The intellectual property creation assisting method according to claim 1,
wherein a conversation device for holding an internet television conference is provided in at least one of the first intellectual property management system and the second intellectual property management system, and prepares a search formula for searching the intellectual property information interactively with a terminal including the same conversation device as the conversation device.

4. The intellectual property creation assisting method according to claim 1,
wherein a search formula is prepared for each second-class licensee, for each first demander, or for each second demander, and stored in the first intellectual property management system in advance, and the first intellectual property management system searches the intellectual property information periodically based on the stored search formula, and publishes a search result on the browser screen.

5. An information providing system added with a sub-license management function, comprising:
a search engine for searching electronic information;
a first-class licensee DB for recording first inherent information of a first-class licensee having an authority to give a sub-license for system use, and a first license condition for the system use permitted from a licenser;
a second-class licensee DB for recording second inherent information of a second-class licensee having concluded an agreement on the sub-license with the first-class licensee, and a second license condition having inherited a part or all of the first license condition;
browser screen preparation means for preparing a first browser screen of which layout is customized for the first-class licensee based on the first inherent information recorded in the first-class licensee DB, and a second browser screen of which layout is customized for the second-class licensee based on the second inherent information recorded in the second-class licensee DB; and
control means for publishing, on the first browser screen, a search result searched by the search engine by means of an information search formula according to the first license condition recorded in the first-class licensee DB, and enabling display of the first browser screen on a display of an operation terminal operated by the first-class licensee, and meanwhile, publishing, on the second browser screen, a search result searched by the search engine by means of an information search formula according to the second license condition recorded in the second-class licensee DB, and enabling display of the second browser screen on a display of an operation terminal operated by the second-class licensee.

6. The information providing system according to claim 5,
wherein the electronic information is technical document information classified into any of plural kinds of fields, and stored in a database from which information is searchable by an access of the search engine.

7. The information providing system according to claim 6,
wherein the technical document information is digitized intellectual property information.

8. The information providing system according to claim 7, further comprising:
a first-class keyword DB storing plural kinds of first-class keywords extracted from all the intellectual property information searchable by the search engine;
a term table correlating the first-class keywords recorded in the first-class keyword DB and one or plural common term data having substantially the same contents as the first-class keywords with each other; and
search formula preparation means for acquiring the one or plural kinds of common term data commonly used in the first-class licensee or the second-class licensee, specifying the first-class keyword corresponding to the acquired common term data, and preparing a search formula for the first-class licensee or the second-class licensee, the search formula including the specified first-class keyword,
wherein the search formula prepared by the search formula preparation means is outputted to the search engine.

9. The information providing system according to claim 8,
wherein the search formula preparation means extracts the common term data commonly used in the first-class licensee or the second-class licensee from an information providing site hosted by the licensee.

10. The information providing system according to claim 7, further comprising:
receiving means for receiving a search formula for the intellectual property information through electronic mail from the operation terminal of the first-class licensee or the second-class licensee; and
determination means for determining whether or not the search formula included in the electronic mail received by the receiving means is fit for a search formula rule registered in advance,
wherein a search formula determined to be fit for the search formula rule by the determination means is outputted to the search engine.

11. The information providing system according to claim 10,
wherein, only in a case where a transmission source of the received electronic mail is the second-class licensee, and an address of the second-class licensee is a predetermined address, the search formula included in the electronic mail is outputted to the determination means.

12. A computer program for causing a computer to operate as an information providing system added with a sub-license management function,
the program causing the computer to function as:
a search engine for searching electronic information;
a first-class licensee DB for recording first inherent information of a first-class licensee having an authority to give a sub-license for system use, and a first license condition for the system use permitted from a licenser;
a second-class licensee DB for recording second inherent information of a second-class licensee having concluded an agreement on the sub-license with the first-class licensee, and a second license condition having inherited a part or all of the first license condition;
browser screen preparation means for preparing a first browser screen of which layout is customized for the first-class licensee based on the first inherent information recorded in the first-class licensee DB, and a second browser screen of which layout is customized for the second-class licensee based on the second inherent information recorded in the second-class licensee DB; and
control means for publishing, on the first browser screen, a search result searched by the search engine by means of an information search formula according to the first license condition recorded in the first-class licensee DB, and enabling display of the first browser screen on a display of an operation terminal operated by the first-class licensee, and meanwhile, publishing, on the second browser screen, a search result searched by the search engine by means of an information search formula according to the second license condition recorded in the second-class licensee DB, and enabling display of the second browser screen on a display of an operation terminal operated by the second-class licensee.
